# DEMANDE DE BREVET EUROPEEN

(11) **EP 2 738 714 A1**
(43) Date de publication de la demande: **04.06.2014**
(21) Numéro de dépôt: 12306500.5
(22) Date de dépôt: 30.11.2012
(51) Int. Cl.: G06K 19/077

(54) **Procédé de fabrication de dispositif électrique ou électronique à interface d'alimentation ou de communication**

(71) Demandeur: Gemalto SA, 92190 Meudon (FR)
(72) Inventeur: Dossetto, Lucile, 83270 SAINT CYR SUR MER (FR); Ottobon, Stéphane, 83270 SAINT CYR SUR MER (FR)

(57) **Abrégé**

L'invention concerne un procédé de fabrication d'un dispositif électrique / électronique comprenant un film-support à interface de communication, ledit procédé comportant les étapes suivantes:
- fourniture ou réalisation d'une pluralité desdits dispositifs électriques (2A) ou électroniques (4A) sur un film-support maître (1);
- séparation du dispositif (2A, 4A) du film-support maître (1).
- Le procédé se distingue en ce qu'il comprend une étape de formation d'une prédécoupe (5) dans le film-support maître autour de chaque dispositif, ladite prédécoupe (5) étant adaptée (24) pour permettre une séparation manuelle de chaque dispositif (2A, 4A).

L'invention concerne également un dispositif obtenu et une bobine de film-support maître comportant les dispositifs.

## Description

L'invention concerne un procédé de fabrication d'un dispositif électrique / électronique à interface de communication et/ou alimentation ainsi que le dispositif obtenu.

L'invention concerne également la fabrication de modules de télécommunication pour machines, notamment de type M2M (machine to machine), qui peuvent avoir différents facteurs de forme.

On peut trouver de tels dispositifs par exemple, sous la forme de modules pour cartes à puce, aux facteurs de forme divers tels que ceux de petits objets électroniques de formats micro-SD (*Secure Digital* en langue anglaise), Micro-SIM (*Subscriber Identity Module* en langue anglaise) ou Plug-in SIM, Mini UICC (*Universal Integrated Circuit Card* en langue anglaise). On peut trouver en outre toute une gamme de boîtiers permettant le montage de composants en surface (CMS ou SMD) ainsi que des boîtiers de type BGA (*Ball Grid Array* en langue anglaise) comportant des billes de connexion. Ces boîtiers comprennent une interface d'alimentation et/ou de communication notamment à contacts électriques ou à antenne. Ces différents objets, boîtiers, carte, modules à interface (complet ou non), sont interchangeables dans le présent document et peuvent être désignés par le terme dispositif.

Les dispositifs trouvent notamment leurs applications dans la sécurité numérique, la santé, la banque, les télécommunications ou encore le contrôle d'identité, le contrôle d'accès physique et/ou logique.

### Art antérieur.

Les procédés connus pour fabriquer de tels dispositifs sont parfois lents, complexes et peu adaptés. Ils comprennent principalement les étapes suivantes:
- Définition d'un rouleau de circuit imprimé spécifique ;
- Découpe mécanique dudit circuit imprimé ou gravure chimique pour définir une forme de contacts ;
- Découpe dans un diélectrique pour créer des puits de connexion ;
- Contre-collage du diélectrique sur le circuit imprimé ;
- Métallisation de plots de contacts ;
- Collage d'une ou plusieurs puces d'épaisseurs variables ;
- Câblage à l'aide de fils pour interconnecter lesdites puces et relier les points de contact ;
- Enrobage sous une résine de protection, etc.
- Extraction du module de la bobine ;
- Encartage du module dans un corps de carte.

Aujourd'hui, les dispositifs (boitiers, modules...) sont généralement assemblés sur un même support à partir d'un substrat en circuit imprimé (PCB ou «Lead frame») présenté sur un film-support maître (ou de travail) en forme de bobine et sur lequel sont collés, soudés et surmoulés plusieurs boitiers. Le film-support maître (leadframe) peut être entièrement métallique sans film support diélectrique isolant. Le film-support maître est alors une grille découpée sous forme de ruban de bobine définissant un chapelet continu d'interfaces de communication et/ ou d'alimentation électrique. La séparation de ces boitiers moulés nécessite une étape de séparation qui ne peut s'effectuer que par machine spéciale de découpe, selon tout type de procédé de découpe automatique (sciage mécanique, poinçonnage, laser, jet d'eau). Cette étape engendre une grande part du coût de fabrication.

### Problème technique.

L'épaisseur ou encombrement des boitiers actuels étant en constante diminution pour faciliter une plus grande intégration dans les appareils portatifs, téléphones, il est nécessaire à cet effet, de prévoir un procédé de fabrication ou agencement plus adapté.

Ainsi, pour les cartes SIM, le passage du facteur de forme 2FF (25 x 15mm²) au 3FF (15 x 12 mm²) et maintenant au 4FF (nano SIM), réduit la surface du module à encarter et limite soit la surface de collage de celui-ci dans le corps de carte SIM, soit la dimension des composants que l'on peut intégrer dans le module.

Du fait de cette miniaturisation, les inventeurs ont envisagé la réalisation de la carte (dispositif) sur la bobine de film support directement au format du module de carte à puce qui est habituellement encarté dans un corps de carte à puce mais ils se sont confrontés au problème de la découpe du dispositif hors de la bobine de modules. Dans l'art antérieur, La mise au format final du plastique d'un corps de carte est réalisée soit au moment de l'injection du corps de carte, soit par extraction /découpe mécanique du corps de carte après encartage du module. A l'exception d'un poinçonnage, rien n'est prévu concernant une découpe du dispositif hors de la bobine.

L'invention a pour objectif de répondre aux inconvénients précités de la miniaturisation des dispositifs à puce et/ou de leur encombrement, de la complexité et coût de leur fabrication.

### Résumé de l'invention.

L'invention prévoit d'une part d'effectuer la mise à l'un au moins des formats du dispositif à puce électronique (boîtier / carte / module) au niveau de la bobine d'un film-support maître (leadframe), d'autre part d'effectuer l'extraction manuelle du dispositif à l'un des formats finaux sur la bobine.

Cette opération semble s'effectuer sensiblement comme l'extraction manuelle d'une mini carte SIM (Plug-in SIM) à partir d'une carte SIM grand format ISO 7816 mais à un stade très en amont du procédé de fabrication de carte. L'extraction s'effectue au stade de la bobine sans avoir à fabriquer un corps complet grand format de la carte SIM et à effectuer l'encartage du module dans un corps de carte.

L'invention permet donc de supprimer plusieurs étapes chez le fabricant de carte à puce comme l'encartage de module et les prédécoupes dans le corps de carte pour l'extraction des dispositifs. Elle permet également de réaliser l'étape de personnalisation des dispositifs au niveau de la bobine et ainsi d'augmenter les cadences.

A cet effet, l'invention a pour objet un procédé de fabrication d'un dispositif électrique ou électronique comprenant un film-support à interface de communication et/ou d'alimentation, ledit procédé comportant les étapes suivantes:
- fourniture ou réalisation d'une pluralité desdits dispositifs électriques ou électroniques sur un film-support maître (5);
- séparation du dispositif du film-support maître;

Le procédé se distingue en ce qu'il comprend une étape de formation d'une prédécoupe dans le film-support maître autour de chaque dispositif, ladite prédécoupe étant adaptée pour permettre une séparation manuelle de chaque dispositif.

Ainsi, le procédé est plus adapté à la miniaturisation des dispositifs et présente en outre l'avantage d'être très pratique pour la distribution au client final sur le lieu de vente.

Selon d'autres caractéristiques :
- la prédécoupe est réalisée de manière à laisser des bretelles reliant chaque emplacement du dispositif avec le film-support maître ;
- Les bretelles ou ponts comportent un amincissement ou fragilisation prévu du côté du dispositif ;
- Les bretelles sont attachées au boîtier par une section de film-support comprise entre 0,02 mm² et 0,2 mm²

Les bretelles sont attachées au boîtier par une section de film-support comprise entre 0,02 mm² et 0,2 mm² pour chacune des bretelles. Cela correspond à environ une largeur de bretelle de 200µm à 2mm à l'endroit où les bretelles doivent se détacher pour une épaisseur de film support de 110 µm par exemple.
- le film-support maître (1) comprend une matrice polymère thermodurcissable en époxy avec fibres de verre ;
- Chaque bretelle peut être rompue par mouvement de rotation ou torsion de la matière de la bretelle au niveau de sa zone / ligne prédéterminée de rupture obtenue manuellement par basculement et/ou rotation du dispositif autour d'un axe passant par la bretelle et/ou un plan du film-support maître.

L'invention a également pour objet le dispositif obtenu correspondant. L'invention a pour objet une bobine de film-support maître comportant des dispositifs électroniques obtenus par le procédé. La bobine peut comporter ou être associée à un cadre d'assistance à la séparation manuelle des dispositifs.

Ainsi, l'invention vise une extraction manuelle des dispositifs très pratique car elle peut ne pas utiliser d'outil apte à trancher, à emboutir, à effectuer un cisaillement net notamment par poinçonnage, sciage du film-support maître (leadframe). Tout au plus, elle peut prévoir un support d'assistance à l'extraction avec évidement correspondant au format du dispositif pour servir d'appui pendant l'extraction du dispositif du rouleau à travers cet évidement.

### Brève description des figures.

- Les figures 1A-1E illustrent un procédé de fabrication d'un dispositif électrique / électronique selon un mode préféré de mise en oeuvre de l'invention ;
- La figures 2 illustre un film-support maître à un stade élémentaire après découpe et similaire à la figure 1B ;
- La figure 3 illustre une vue agrandie d'un dispositif de l'invention isolé du film-support maître de la figure 1C ou 2 ;
- Les figures 3A, 3B, 3C illustrent respectivement une vue agrandie d'une bretelle extraite du dispositif de la figure 3, une coupe A-A de la figure 3 et une vue de côté en coupe B-B de la figure 3B;
- Les figures 3D et 3E illustrent deux modes de réalisation des prédécoupes, des amincissements ou des fragilisations des bretelles ;
- La figure 4 illustre un moule utilisable pour surmouler les dispositifs ;
- La figure 5 illustre une vue partielle en coupe transversale d'un dispositif de la figure 1B relié à son film-support maître soumis à des forces de séparation ;
- La figure 6 illustre une vue d'un dispositif de l'invention séparé du film-support maître de la figure 5 suite à l'application de forces de séparation ;
- Les figures 7 et 8 illustrent un moyen facultatif d'assistance à la séparation des dispositifs de leur film-support maître ; en vue de face et en coupe transversale selon C-C ; - Les figures 9 et 10 illustrent respectivement un dispositif obtenu selon le mode préféré de l'invention avec film support isolant (diélectrique) et sans film support isolant sous l'interface.

### Description.

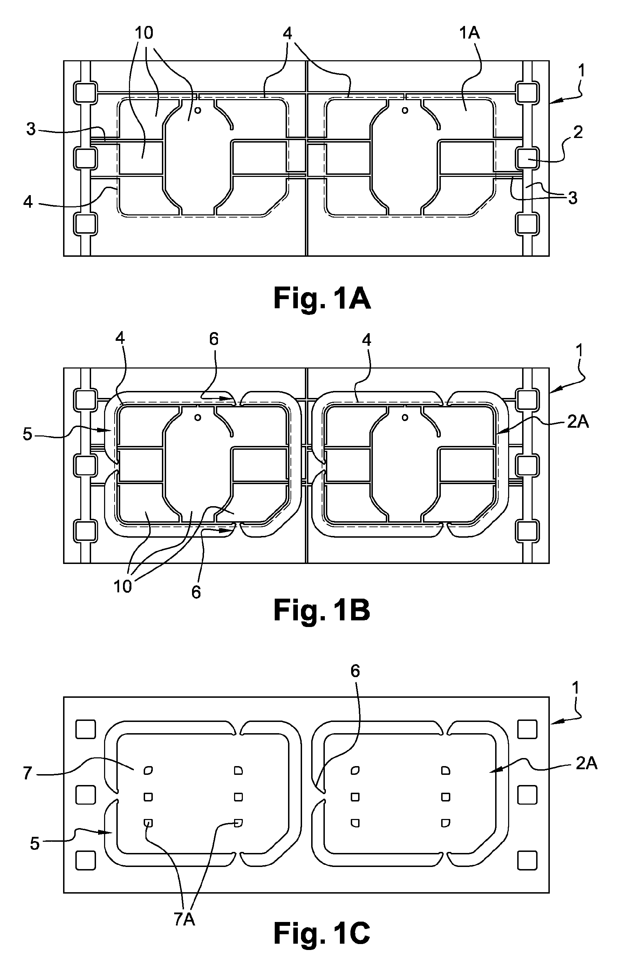

Le procédé de fabrication d'un dispositif électrique ou électronique comprenant un film-support à interface de communication et/ou d'alimentation est décrit ci-après en relation avec les figures 1A-1E.

Selon un premier mode de mise en oeuvre, le procédé comprend une étape de fourniture ou de réalisation d'une pluralité de dispositifs électriques / électroniques 1A-4A sur un film-support maître 1.

L'interface peut comprendre au moins un jeu de métallisations comprenant des plages ou pistes conductrices pouvant former notamment de contacts électriques ou une antenne radiofréquence de toute sorte (UHF, RF).

A la figure 1A, dans l'exemple, on réalise ou fournit un film-support maître (ou principal ou de travail) sous forme d'un film support en bobine 1 comportant un chapelet d'interfaces 1A à contacts électriques 10 par deux rangées. Il s'agit ici d'un ruban de type « lead frame » avec des orifices latéraux d'entrainement 2. Les interfaces sont reliés à des amenées de courant 3 de mise à la masse ou pour permettre une métallisation.

Les interfaces ou jeux de contacts électriques sont ceux d'une carte à puce conforme à une norme. Il s'agit ici d'un jeu de contacts pour carte SIM à 6 contacts électriques conforme à la norme ISO 7816. Ces contacts sont gravés et supportés par un film-support isolant 1 (ou 7 après découpe).

La description est faite préférentiellement pour des métallisations de contacts électriques mais l'invention peut s'appliquer également à d'autres éléments conducteurs électriques tels que pistes, antennes. Ainsi, dans toute la description, l'interface à 6 contacts peut être remplacée par une interface radiofréquence à antenne. Dans le cas d'une interface à antenne radiofréquence, celle-ci peut être réalisée à plat sous forme de spirale ou autre motif notamment pour UHF, etc.

Alternativement ou à un stade plus avancé de fourniture ou de réalisation illustré sur les figures suivantes, le dispositif peut comprendre au moins une puce de circuit intégré reliée ou non à l'interface de communication /alimentation à contacts ou à antenne et/ou points /pistes d'interconnexion.

Selon une alternative à l'opération préférée de gravure des contacts, on peut prévoir de fixer une grille conductrice électriquement sur le support isolant pour former des contacts électriques et/ou des pistes et/ou au moins une antenne. On peut aussi utiliser une grille sans support isolant sous les contacts.

Alternativement comme indiqué ultérieurement, la grille ou chaque interface peut être supportée et maintenue en place par rapport aux autres interfaces, par un ruban/film isolant amovible fixé notamment sur ou en dehors de la face extérieure des contacts électriques 10 ou de zones de test électrique / personnalisation.

Les interfaces peuvent aussi demeurer attachées provisoirement au film-support maître après découpe complète autour de leur emplacement par un élément de joint ajouté, par exemple un joint placé dans l'espace 5 de découpe (sans bretelle).

Selon une caractéristique de ce premier mode et applicable aux alternatives susvisées, le procédé comprend une étape de formation d'au moins une prédécoupe 5, fragilisation ou zone prédéterminée de rupture dans le film-support maître autour de chaque dispositif. La prédécoupe, fragilisation ou zone prédéterminée de rupture est adaptée ou configurée pour permettre une séparation / extraction au moins manuelle de chaque dispositif de son emplacement 4.

Chaque interface 1A ou jeu de plages de contact électrique 10 supporté par le ruban de bobine maître peut être destiné à être délimité ou entouré par une prédécoupe 5. La prédécoupe peut être réalisée par un évidement périphérique partiel de quelques microns à quelques millimètres dans le ruban maître.

Dans l'exemple préféré, illustré aux figures 1B, 1C, on a réalisé un évidement 5 de quelques millimètres (1-2 mm) autour de l'emplacement 4 du dispositif notamment par poinçonnage, laser, etc. à l'exception de certains endroits définissant des bretelles 6.

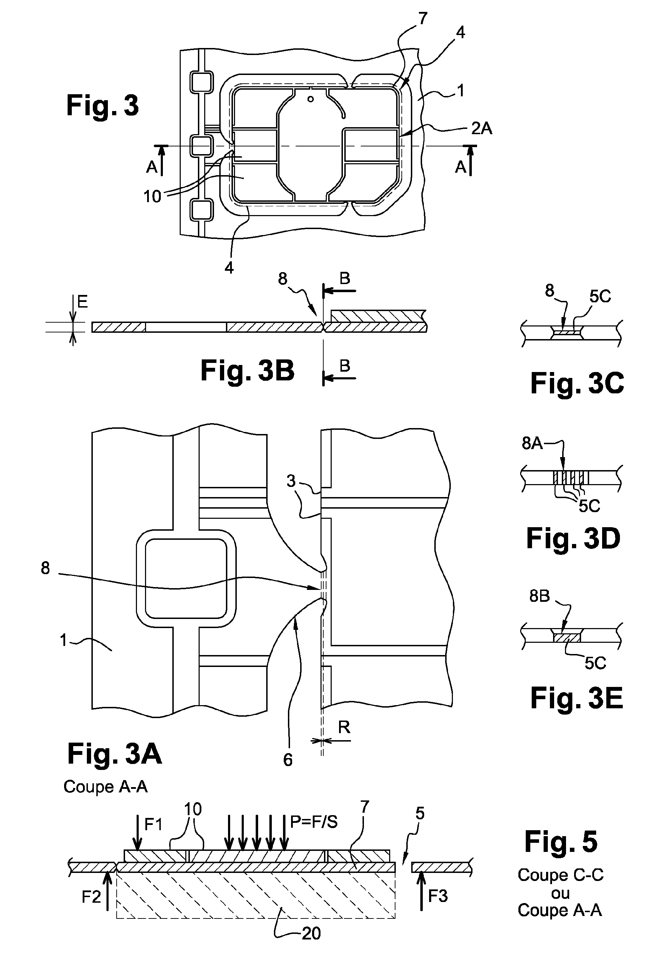

La figure 1C illustre une vue de dessous de la figure précédente. Des perforations 7A de connexion aux plages de contacts 10 débouchent en surface arrière du film support (diélectrique 7). Les bretelles sont de préférence configurées (fig. 3A) de manière à concentrer les contraintes de séparation / rupture à l'endroit où l'on veut qu'elles cassent. Elles peuvent être placées tout autour du dispositif. Elles sont de préférence de faible largeur / section pour faciliter la séparation manuelle du dispositif. Elles sont dans l'exemple au nombre de trois réparties sur trois cotés de la carte SIM de façon à créer un effet de pivot facilitant l'extraction manuelle du dispositif.

De préférence, le film-support maître (leadframe) est prédécoupé lors de sa fabrication ou à la fin de sa fabrication avant l'assemblage (report et connexion de la puce...). Les prédécoupes peuvent se faire de préférence comme dans l'exemple, après lamination, gravure et métallisation du cuivre.

Ces évidements 5 de prédécoupe pourront également servir pour dé-court-circuiter des amenées de courant 3 permettant la métallisation des plages métalliques de contacts ISO, ce qui minimise l'impact coût chez le fabricant de film.

Ou inversement, on pourrait faire passer les amenées de courant par les bretelles pour relier les masses par exemple.

Entre-autre, cette prédécoupe pourra servir de barrière pour la résine dans le cas où le procédé d'assemblage utiliserait une distribution de résine comme ce serait le cas avec la technologie pastille de verre étendue de renfort à base de fibre de verre ; Dans ce cas là, on utilisera un film décollable sur le coté contact afin que la résine ne passe pas à travers les prédécoupes du film support qui forment la mini-carte afin d'empêcher la pollution des équipements.

Dans le cas où les métallisations de surface des interfaces sont réalisées en faisant intervenir des pistes d'amenées de courant, on peut veiller à ce que ces pistes aient une configuration facilitant leur découpe ou séparation lors de l'extraction des dispositifs par rapport au film-support maître. Les pistes peuvent, par exemple, avoir une forme de striction, ou prédécoupe ou réduction de section à l'endroit où elles doivent être sectionnées.

Les prédécoupes peuvent se faire aussi en même temps que les perforations des puits de soudure dans le diélectrique et donc avant lamination du cuivre, pour ainsi profiter d'un seul outil de perforation ou poinçonnage.

Alternativement, il est possible de faire les prédécoupes ou bretelles après assemblage voire après surmoulage.

Alternativement à l'exemple, chaque dispositif peut être maintenu par une bretelle unique ou deux ou trois ou quatre; Elles peuvent être larges, par exemple s'étendant sur un tiers ou totalité d'un côté de dispositif. La découpe peut être totale autour du dispositif tandis qu'il est remis en place dans son emplacement 4 par coincement, collage ou autre ; A cet effet, la découpe peut être très fine notamment par laser ou poinçonnage. Le cas échéant, une matière de comblement / d'adhérence (par exemple une cire, joint silicone) peut être placée entre le dispositif et le film-support maître ou à cheval de ces derniers pour constituer des bretelles, ponts facilement amovibles (en particulier pour un ruban métallique ou film-support maître).

La prédécoupe peut comprendre une fragilisation tout autour de l'emplacement 4 du dispositif. La fragilisation peut être de tout type, par exemple, un amincissement d'épaisseur tout autour du contour final 4 du dispositif ou partie de ce contour, des micro-perforations notamment par laser, un pré-poinçonnage, un amincissement symétrique ou asymétrique sur une face ou les deux faces opposées du film support.

Selon une caractéristique de ce mode préféré, la prédécoupe 5 est réalisée de manière à laisser des bretelles / ponts / autres jonctions provisoires 6 reliant chaque dispositif 2A-4A ou boîtier 5A avec le film-support maître 1. On remarque ici illustré, que la jonction du dispositif 2A-4A au film-support maître 1 s'effectue uniquement selon ce premier mode préféré par de la matière de bretelle 6 du film-support maître. L'invention prévoit aussi des jonctions ajoutées distinctes du film-support maître (joint, film, ruban adhésifs...)

A la figure 3A, la bretelle 6 comporte une zone de rupture 8 correspondant à une zone où sa largeur est la plus étroite. Ainsi, la largeur de la bretelle va en se rétrécissant en direction du dispositif jusqu'à une ligne 8 à partir de laquelle la bretelle s'étend vers le dispositif 2A en s'élargissant. La largeur la plus étroite de la bretelle définit une ligne prédéterminée de rupture 8.

La bretelle est configurée de préférence de manière à être rompue au moins manuellement, par exemple par simple pression des doigts ou pression d'un doigt d'une main sur le dispositif, tandis que le ruban ou film support peut être tenu avec l'autre main. Les bretelles présentent préférablement une forme en striction c'est-à-dire moins large à l'endroit où l'on souhaite la rupture que dans le reste de la bretelle. La striction est réalisée de façon à ce que la contrainte mécanique transmise par la pression du doigt sur le dispositif sensiblement au centre d'une de ses surfaces principales S se concentre directement à l'endroit de la striction de plus faible largeur et/ou épaisseur de la bretelle.

Chaque film-support maître 1 comprend au moins une zone préférentielle de rupture / striction 8 localisée au plus près du contour final / emplacement 4 de chaque dispositif illustré ci-dessous. La zone de rupture 8 est prévue de manière que la périphérie ou contour global 4 du dispositif ne soit pas affectée / dépassée. Ce contour à ne pas dépasser peut en effet être standardisé.

Selon une autre caractéristique de ce premier mode préféré, le raccordement des bretelles à l'emplacement de chaque dispositif peut comprendre une zone en retrait vers l'intérieur de l'emplacement du boîtier. Ainsi, une éventuelle bavure résiduelle suite à la rupture, ne s'étend pas en dehors du contour du dispositif.

Dans l'exemple, les bretelles comportent une zone / ligne de fragilisation ou prédéterminée de rupture qui est localisée au plus près du contour final 4 du dispositif. Par exemple, il existe un écart « R » de la zone / ligne de rupture 8 par rapport au contour final 4, généralement standardisé. L'écart ou retrait « R » ne dépasse pas 0,5 mm ou de préférence 0,1 mm.

La largeur de la bretelle dans la zone de rupture (donc la moins large) est d'environ entre 200 microns et 2 mm. En particulier, les bretelles peuvent présenter une section résiduelle de 0.02 mm² à 0.2 mm² pour chacune des bretelles. Ces sections correspondent à environ une largeur de bretelle de 200 µm à 2 mm à l'endroit où les bretelles doivent se détacher pour une épaisseur de film support 1 de 110 µm par exemple, mais qui pourrait être aussi de 50 à 200 µm d'épaisseur.

En complément facultatif, la bretelle peut comporter un amincissement en épaisseur à cette zone ou ligne prédéterminée de rupture 8 (illustré en pointillés) pour faciliter encore la rupture manuelle des bretelles. On peut donc amincir localement en épaisseur les bretelles dans leurs zones de plus faible largeur, bien que ce ne soit qu'une option par rapport au procédé préféré. L'amincissement peut être fait, par exemple, par fraisage mécanique ou poinçonnage.

A la figure 3B et 3C, le film-support maître peut comporter un amincissement 8 notamment en forme de V sur chacune de ses faces opposées. La bretelle est amincie ici d'environ 50 %

A la figure 3D, le film-support maître peut comporter l'amincissement / fragilisation 8 sous forme de perforation(s) 8A sur toute l'épaisseur du film support. Chaque perforation peut aussi être partielle sur l'épaisseur. La section résiduelle de la bretelle à l'endroit 8 de striction est ici réduit de 50 % environ.

A la figure 3E, le film-support maître comporte une diminution d'épaisseur sur une seule face du côté des plages de contact électrique. La section résiduelle peut être réduite par exemple de 50 %.

Dans une variante non représentée, le module est découpé totalement et le procédé comprend une étape (possible à différents stades), de collage provisoire d'un moyen adhésif de maintien en position de chaque dispositif sur le film-support maître. Ce moyen peut être un film, ruban(s), fil(s) adhésif(s), cire, joint silicone ou autre permettant de maintenir provisoirement chaque dispositif en place. Ce moyen de maintien est de préférence fixé du côté de la face portant les contacts électriques 10.

Ainsi, en utilisation, il suffit de décoller chaque dispositif manuellement du film-support maître. Dans le cas d'un film, cela a l'avantage de protéger en partie ou en totalité les contacts au cours des différentes étapes subséquentes du procédé. Le film peut comporter une fenêtre devant chaque plage de contact électrique pour permettre un accès pour la personnalisation électrique. Ce moyen adhésif de maintien (amovible ou repositionnable) peut être placé avant ou après la découpe complète des dispositifs.

Les bretelles de maintien sont ici réalisées en matière du film-support maître, de manière à permettre les différentes opérations subséquentes de fabrication telles que transport, manipulation du dispositif sur le ruban et séparation.

Alternativement, les bretelles sont réalisées par ajout de matière pouvant comprendre un film, des fils, un ruban, un joint adhésif, un joint silicone décrit précédemment.

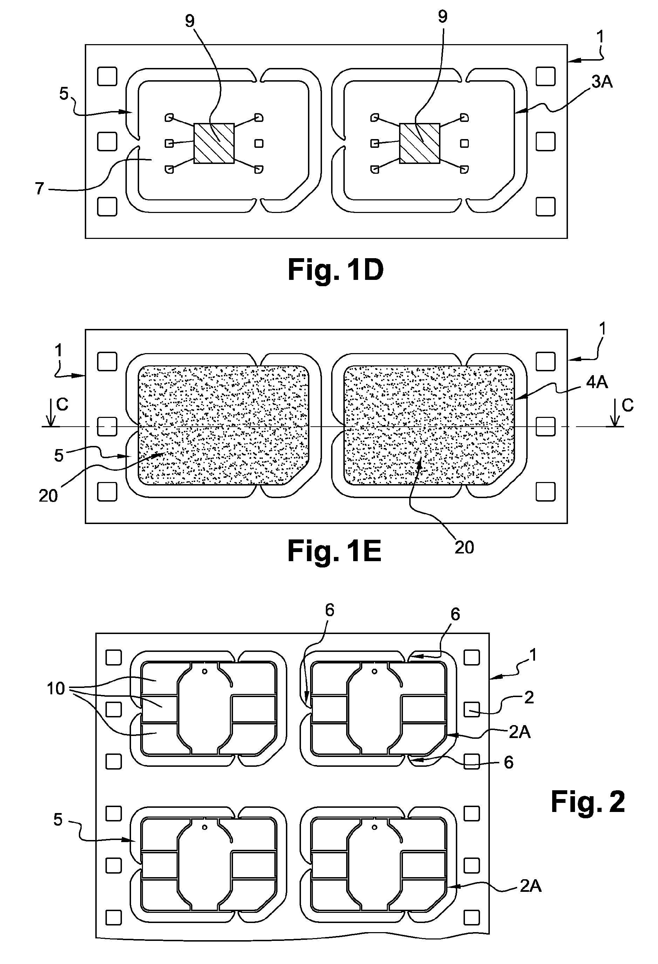

Selon une autre alternative non représentée et optionnelle, on peut fixer provisoirement les films-supports maîtres des modes précédents, entièrement ou quasiment découpés par rapport aux dispositifs 2A, 4A, sur un ruban adhésif placé sur la face externe des interfaces. Il peut contenir les dispositifs réalisés après les étapes de la figure 1B, 1C, 1D ou 1E ou (avec ou sans film-support diélectrique sous les métallisations et avec ou sans bretelle métallique ou diélectrique).

Dans le cas de bretelles présentes, on peut sectionner localement les bretelles, notamment métalliques, par découpe mécanique, laser, ou avec un autre outil non manuel de découpe. Les interfaces restent en place dans leur emplacement 4 car maintenues par le ruban adhésif. Le complexe ainsi formé peut rester tel que pour être livré au client (opérateur) ou on peut retirer le film-support maître en laissant les dispositifs sur le ruban adhésif.

Le film-support adhésif peut être sectionné localement sous la bretelle diélectrique ou métallique qui a été sectionnée mécaniquement, chaque interface étant maintenue par ailleurs par le moyen adhésif ajouté.

Les bretelles sont configurées de manière à permettre une rupture sous une force de 5 à 30 Newtons. Une force appliquée comme décrit à la figure 5, par un pouce (pouce d'une surface d'environ 1cm²) sur une carte (telle que du type 4FF), correspond à 0,05 MPa à 0,3 MPa de pression (sachant que 1 MPa = 10⁶ Pascal = 1000 000 Newton.m⁻²).

Selon une caractéristique de ce premier mode préféré, le film-support 1 peut comprendre un matériau fragile adapté à la rupture. Il peut comprendre notamment des fibres fragiles.

La matière du diélectrique du film support (leadframe) et donc des bretelles à rompre est choisie spécifiquement pour ses propriétés à se rompre de manière cassante lors de la séparation / extraction ; Le film-support maître peut avoir dans l'exemple une épaisseur comprise entre environ 50 et 150 µm.

Dans l'exemple, on choisit un composite de fibres cassantes dans une matrice de résine. Plus précisément, la nature du film est de préférence une matrice polymère thermodurcissable, par exemple époxy avec fibres de verre. Ainsi on obtient un matériau à haut module d'Young qui sera plus cassant qu'un polymère seul même à module élevé.

Des essais manuels montrent notamment que la rupture des bretelles est franche et aisée et de bonne qualité avec un film-support maître en complexe verre et époxy.

A priori, pour la rupture manuelle des bretelles, on ne préfère pas un matériau métallique ductile comme du cuivre constituant les bretelles car il pourrait plus difficilement se rompre manuellement, proprement et sans déformation selon des dimensions spécifiées.

A la figure 1D, on procède au report et connexion d'une puce électronique 9 à circuits intégrés sur le support (ou le cas échéant sur les éléments conducteurs ou à travers une ouverture dans le film support 7.

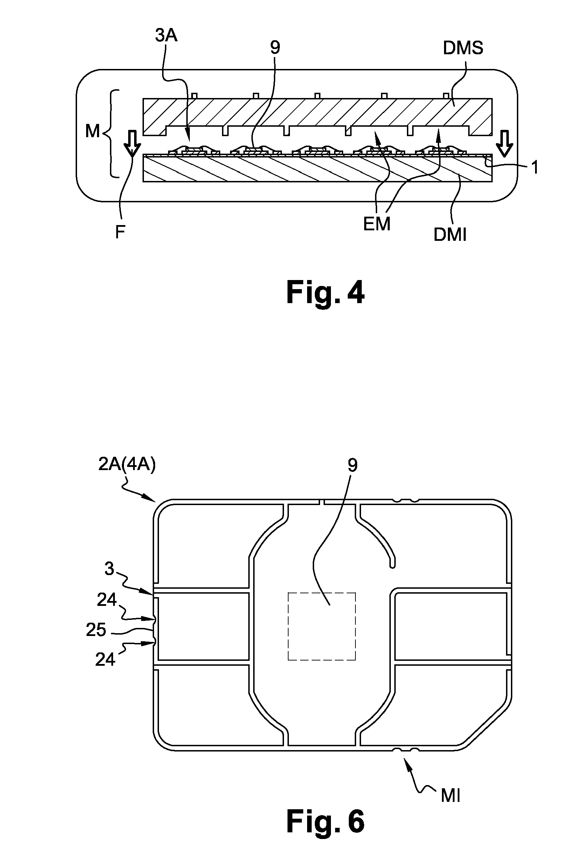

A la figure 1E, on procède ensuite au moulage à la dimension finale du dispositif ou boîtier 4A avec une matière de surmoulage isolante 20 et un moule M comme illustré à la figure 4 décrite ci-dessus.

A la figure 5, on procède à une séparation du dispositif 2A (ou 4A illustré en pointillé) ; Cette figure illustre un test de séparation reproductible mais peut illustrer aussi une séparation manuelle de ce dernier.

A la figure 4, on décrit une installation de moulage pouvant être utilisée par le procédé de l'invention. On a recours à un moule M, comprenant une première partie inférieure DMI pour supporter le film-support maître 1 comprenant les dispositifs 3A au stade illustré à la figure 1D, comportant les puces connectées. Le moule comprend une seconde partie supérieure DMS correspondante comportant une pluralité de cavités de moulage (EM) aux dimensions et formes correspondantes aux corps des objets / boîtiers / dispositifs à obtenir.

Le moule DMS, DMI est refermé suite au déplacement (F) de la partie supérieure DMS contre la partie inférieure DMI et contre le substrat 5. Une pluralité d'espaces de moulage (EM) correspondant aux cavités de moulage CM est définie au dessus du film-support maître 1 et de la pluralité de puces électroniques 9.

On injecte ensuite de la matière dans les espaces de moulage pour surmouler chaque puce électronique 9 et former chaque corps 20 de dispositif 4A aux dimensions finales (ou contour final) du dispositif 4A. Le moule comporte de manière connue (non représentée) un ou plusieurs point(s) d'injection de matière dans chaque cavité de moulage (EM), par exemple sur les parois de chaque cavité correspondant à une tranche des objets ou face arrière (opposée à la face portant les contacts 10).

Ensuite, la partie supérieure DMS du moule s'éloigne (O) de la partie inférieure pour ouvrir le moule, le support ou substrat 5 étant maintenu sur la partie inférieure DMI du moule notamment par aspiration.

Les boitiers moulés peuvent être éjectés des cavités (EM) ou compartiments du moule lors de la remontée (O) de la partie supérieure du moule ; L'invention peut prévoir des éjecteurs 14 coulissants (15) dans la partie supérieure du moule DMS au dessus des boitiers et contre leur face arrière, à travers chaque cavité de moulage (EM), pour extraire les boîtiers de leur cavité.

Ainsi, après la remontée du moule DMS, l'invention permet ainsi de réaliser le film-support maître 1 comportant un chapelet de dispositifs électroniques 4A extractibles manuellement tel qu'illustré à la figure 1E.

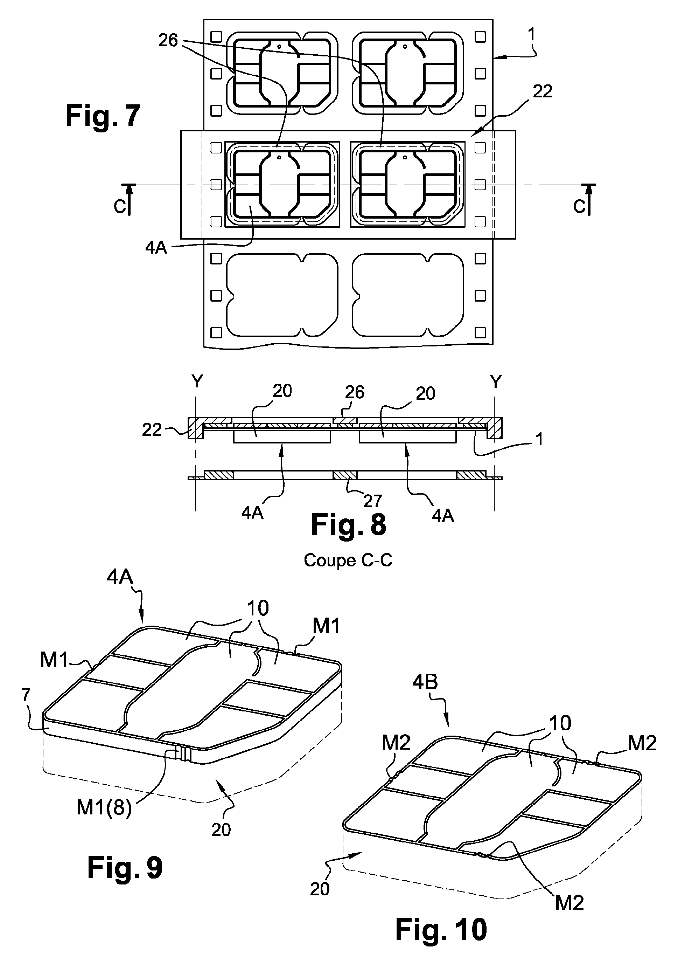

A la figure 9, le dispositif obtenu comporte un film support 7 supportant les plages de contact 10. Il comporte selon le mode préféré, des marques de rupture M1 positionnées à l'endroit des bretelles. Ces marques peuvent comprendre une partie de la configuration des bretelles favorisant une striction ou découpe concave.

La configuration peut définir deux « V » de part et d'autre de la matière rompue au niveau de la ligne 8. Le cas échéant, la configuration au niveau de la zone rompue peut comprendre une partie des configurations d'amincissement facultatives illustrées aux figures 3b-3E (trous partiels 8A, tranche inclinée du film support 8, épaulement de rainure 8B)

A la figure 10, le dispositif ne comporte pas le film support 7 sous les plages de contact. Le film-support maître était un ruban métallique (ou grille) découpé.

Le dispositif peut comprendre aussi des marques M2 de coupe mécanique comme les marques de coupure des amenées de courants 3, disposées similairement à la figure précédente mais située sensiblement au niveau des métallisations 10.

Toujours selon ce premier mode préféré, le procédé comprend ensuite l'étape de séparation du dispositif du film-support maître 1 comme illustré ci-après.

La figure 5 illustre un film-support maître en coupe transversale. Un dispositif 2A est représenté ici mais ce schéma peut s'appliquer aussi à des dispositifs 4A d'un film-support maître plus avancé de la figure 1F (avec son corps surmoulé en pointillé).

Cette figure définit un test pouvant caractériser les bretelles ou une prédécoupe partielle. Les bretelles sont définies de manière qu'une force F appliquée sensiblement au centre du dispositif sur une surface S égale par exemple à la moitié de la surface du dispositif, provoque la rupture d'au moins une bretelle. Le film-support maître est de préférence sur un contre-appui F2 au niveau des bretelles, en dehors et à proximité du contour du dispositif, par exemple 3 mm du contour 4.

Le contre-appui peut être formé par au moins un doigt ou par un cadre d'assistance 27 de la figure 8.

Une force F d'environ 5 à 30 (voire 50) Newton est nécessaire pour rompre ces bretelles manuellement et retirer ainsi la SIM du film support (leadframe). On peut caractériser cette force en réalisant un test où une tige de section S ci-dessus se déplace et enregistre la force appui au centre de la SIM jusqu'à rupture des bretelles.

Le cas échéant, l'invention peut prévoir une force d'extraction allant de 4 à 15 Newton, voire de 4 à 10 Newton. Par comparaison, actuellement la force nécessaire pour rompre des bretelles comme formées dans le plastique en ABS de corps de carte SIM et extraire une mini SIM dans des conditions similaires est de l'ordre de 17 Newton dans le cas d'une carte SIM de format 4FF.

Alternativement, on peut définir les bretelles et le cas échéant leur zone de striction de manière qu'une force F1 soit appliquée au bord du dispositif 2A, 4A à proximité d'une bretelle (à distance de 1-2 mm de l'évidement 5) et qu'une force F2 de contre-réaction ou d'appui, soit appliquée comme précédemment de l'autre côté du film-support maître en dehors du contour du dispositif et à proximité (1-3 mm). La force à appliquer sur une bretelle jusqu'à sa rupture est de l'ordre de 3 à 5 Newton. Chaque point d'application de force F1 et de contre-appui F2 peut s'effectuer sur une surface d'environ 4 mm2 en regard et à proximité de la bretelle.

Facultativement, la séparation d'un dispositif 2A-5A peut être réalisée à l'aide d'un dispositif manuel de contre-appui et le cas échéant de centrage de pression de séparation sur une ou plusieurs zone(s) du dispositif (centrale, latérale) ou au voisinage des bretelles ou directement dessus.

Les figures 7 et 8 illustrent un moyen 21 facultatif d'assistance à la séparation manuelle des dispositifs 4A, 4B. Ce moyen peut être placé à demeure (ou attenant) sur le chapelet ou bobine de dispositifs du film-support maître 1. Il peut comporter une base 22 définissant un cadre d'appui autour de l'emplacement de chaque dispositif à extraire. Il peut être en métal ou plastique.

Ici, la base 22 comprend deux cadres ou fenêtres 26. Chaque cadre est de préférence positionné contre le film-support maître du côté des interfaces 10 (l'autre côté opposé est possible). En fait cette base à fenêtre(s) permet de servir de surface d'appui et de concentrer l'effort manuel transmis par les / le doigt(s) (pouce) sur le corps 20 moulé vers les zones les moins larges des bretelles et ainsi faciliter la casse de celles-ci. La base à fenêtre(s) peut ainsi aider l'opérateur sur le lieu de vente à extraire la SIM.

Le moyen de séparation 21 peut comprendre un autre cadre 23 placé de l'autre côté du film-support maître comportant une ouverture 27 pour chaque dispositif (Ici deux). Ce second cadre se positionne de l'autre côté du film support de manière à prendre en sandwich et pincer le film support-maître 1 sensiblement autour d'une paire de cartes 4A à extraire sur un contour passant à proximité des bretelles ou passant sur les bretelles de préférence.

Une fois le film support pincé, une pression manuelle exercée sur un dispositif 4A, de préférence sur la matière de moulage (ou le côté opposé), permet de rompre les bretelles éventuelles.

En cas de recours à un moyen adhésif amovible de maintien des dispositifs dans leur emplacement sur le film-support maître (film isolant, ruban, fils, joint) ; il suffit de retirer le dispositif du moyen adhésif par préhension avec les doigts.

A la figure 6, le dispositif intermédiaire 2A est extrait mais il peut s'agir également d'un dispositif 4A achevé. Les pistes d'amenées de courant 3 peuvent parvenir jusqu'au bord du dispositif. Le dispositif peut comprendre des marques M1 correspondant à la partie résiduelle de la bretelle après séparation.

Des marques de rupture 25 des bretelles relatives à la séparation du dispositif et des marques 24 de concentration de contrainte de part et d'autre de la marque 25, apparaissent sur le dispositif extrait. En particulier, la marque M1 peut comprendre des parties concaves 24 ou en « V » de part et d'autre de la zone rompue 25.

La carte 4A, réalisée avec support isolant sous les plages de contact 10, peut comprendre après séparation par rupture, une marque M1 correspondant à chaque bretelle et située au niveau du film diélectrique 7. Chaque marque peut être associée ou accompagnée d'un profil correspondant à un amincissement ou à une concentration de contrainte conforme à l'un des moyens de fragilisation des figures 3A-3E.

Les dispositifs ou boîtiers 4A ont ici la forme de mini cartes 4A, 4B à contacts électriques 10 affleurant leur surface principale. La matière ou résine de moulage constituant le corps isolant 20 de la carte ou dispositif comprend une face pouvant se situer au même niveau externe que les plages de contact 10 pour le dispositif 4B.

Il peut être utile d'extraire un dispositif électrique ou module à un stade intermédiaire non terminé par exemple comme les dispositifs 2A-3A (figs. 1B, 1D) comprenant notamment une interface de communication et/ou d'alimentation et/ou d'interconnexion 10 pour effectuer des opérations subséquentes d'assemblage dans une machine acceptant un format de module après découpe.

Ainsi, selon le mode préféré, l'invention permet de supprimer l'étape de séparation du dispositif en interne ; On simplifie considérablement la fabrication notamment des mini-cartes SIM, d'autant plus que dans le procédé actuel avec module encarté, la miniaturisation rend de plus en plus critique et complexe cette étape de séparation.

Le format bobine des dispositifs notamment mini-cartes offre de plus un conditionnement de livraison au client très économique. C'est un chapelet de mini-cartes en rouleau que l'operateur de téléphonie mobile sépare manuellement pour le vendre au client.

Le rouleau peut être associé aux cadres 26 et/ou 27 montés d'office sur le ruban pour faciliter la séparation des dispositifs. Ces cadres peuvent être assemblées ensemble et/ou coulissés selon l'axe Y perpendiculaire à la surface des rubans pour pincer le film-support. L'ensemble assemblé peut coulisser le long du film-support maître 1.

Le film-support maître 1 est déterminé avec une pluralité de dispositifs 24, 4A ; Toutefois, l'invention peut s'appliquer à un film-support maître comportant un seul dispositif. Le film support peut être aussi sous forme de plaque de film-support comportant une pluralité de dispositifs plutôt qu'une bobine de film.

Bien que l'usage de bretelles métalliques présente des inconvénients (le cuivre se déforme et ne rompt pas aussi bien que des bretelles en film). L'invention peut néanmoins l'envisager, par exemple pour une utilisation moins rigoureuse des dispositifs ou résultat non standardisé.

Car en fait, le recours à des bretelles métalliques relève de la même idée de l'invention qui est d'extraire les dispositifs manuellement directement du film-support maître (lead frame) qu'il soit entièrement métallique ou avec film support diélectrique isolant.

On décrit ci-après des modes de réalisation pouvant comporter pour la plupart au moins une bretelle métallique prolongeant une plage de contact et pouvant avoir une forme sensiblement comme à la figure 3B en vue de dessus.

Bien que ce ne soit pas le mode préféré de l'invention à cause des difficultés de séparation manuelle du cuivre. L'invention pourrait s'appliquer à un film support maître entièrement métallique sans film support isolant. Le cas échéant, on peut prévoir un retrait R plus important pour d'éventuelles bavures au niveau de bretelles métalliques et/ou des lignes prédéterminées de rupture plus élaborées / calibrées.

Le cas échéant, pour faciliter la rupture des bretelles métalliques, on peut prévoit des bretelles dont l'agencement et configuration autour du dispositif permet une rotation du dispositif autour de la bretelle (métallique ou non). Ce serait donc un mouvement de rotation par exemple dans un sens et dans l'autre opposé qui permettrait une rupture de la matière de la bretelle (métal ou autre) en dépassant la limite élastique de la matière (comme un mouvement manuel alterné pour une rupture d'un fil de fer).

L'invention peut prévoit au moins une bretelle métallique et deux points ou ponts de maintien provisoires facilement détachables comme par exemple, deux points de colle silicone (ou autre moyens adhésifs similaires évoqués précédemment) disposés autour de dispositif pour définir un plan passant par les points et la bretelle.

En alternative, dans la même idée, on retient deux bretelles métalliques disposées notamment sur des côtés distincts du dispositif de préférence sensiblement en regard l'un de l'autre (sur une ligne fictive perpendiculaire aux côtés). Le cas échéant, un troisième point de maintien adhésif est disposé sur un côté distinct des deux précédents.

Ces deux modes permettent de rompre les bretelles métalliques en effectuant au moins une rotation du dispositif autour d'un axe de rotation fictif passant par les bretelles.

Donc d'une manière générale pour tous les modes de l'invention (même avec bretelle non métallique), les bretelles peuvent être agencées et configurées de manière à permettre une rupture de bretelle (petite ou plus large) par un mouvement manuel de rotation du dispositif autour d'un axe passant par chaque bretelle concernée.

Dans le cas d'une bretelle large (ou deux bretelles sur un même côté définissant une ligne), l'axe de rotation peut correspondre sensiblement à une ligne d'attache du dispositif 24, 4A au film-support maître 1 en étant parallèle à un bord du dispositif.

L'invention peut donc prévoir en général au moins une seule bretelle métallique à rupture par mouvement (notamment manuel) de rotation ou torsion de la matière de la bretelle par basculement et/ou rotation du dispositif notamment au niveau de sa zone / ligne prédéterminée de rupture autour d'un axe fictif passant par la bretelle et/ou un plan du film support maître.

Le dispositif comportant au moins une bretelle apte à être rompue par rotation ou torsion (notamment alternée), peut être maintenu en place dans le film support maître par au moins cette bretelle d'une part et par coincement au niveau d'au moins un autre côté du dispositif d'autre part.

La bobine de film-support maître contenant une pluralité de dispositifs peut être conditionnée avec un ruban polymère, papier ou autre matière de protection et/ou de maintien enroulé en même temps qui s'interpose (de préférence) sur les plages de contacts, entre les dispositifs bobinés et qui peut aider à maintenir en place les dispositifs. Ce ruban peut être légèrement adhésif.

## Revendications

1. Procédé de fabrication d'un dispositif électrique /électronique comprenant un film-support à interface de communication, ledit procédé comportant les étapes suivantes:
- fourniture ou réalisation d'une pluralité desdits dispositifs électriques (2A) ou électroniques (4A) sur un film-support maître (1) ;
- séparation du dispositif (2A, 4A) du film-support maître (1);
**caractérisé en ce qu'**il comprend une étape de formation d'une prédécoupe (5) dans le film-support maître autour de chaque dispositif, ladite prédécoupe (5) étant adaptée (24) pour permettre une séparation manuelle de chaque dispositif (2A, 4A).

2. Procédé selon la revendication précédente, **caractérisé en ce que** la prédécoupe (5) est réalisée de manière à laisser des bretelles (6) reliant chaque emplacement (4) du dispositif (2A, 4A) avec le film-support maître (1).

3. Procédé selon la revendication précédente, **caractérisé en ce que** des bretelles ou ponts (6) comportent un amincissement, fragilisation (8) ou zone prédéterminée de rupture dans le film-support maître autour de chaque dispositif.

4. Procédé selon la revendication précédente, **caractérisé en ce que** le film-support comprend un matériau fragile adapté à la rupture tel que des fibres.

5. Procédé selon la revendication précédente, **caractérisé en ce que** le raccordement (24) des bretelles à l'emplacement (4) de chaque boîtier comprend une zone en retrait (8, 8A, 8B) vers l'intérieur de l'emplacement du boîtier.

6. Procédé selon la revendication précédente, **caractérisé en ce qu'**il comprend une étape de connexion d'une puce (9) à chaque interface (10) et de formation d'un boîtier (20) recouvrant chaque puce.

7. Procédé selon l'une des revendications précédentes, **caractérisé en ce que** le film-support maître (1) est déterminé avec une pluralité d'interfaces de communication (10) et d'emplacement (4) de formation de boîtiers (20).

8. Procédé selon l'une des revendications précédentes, **caractérisé en ce que** le film-support maître a une épaisseur comprise entre 50 et 200µm.

9. Procédé selon l'une des revendications précédentes, **caractérisé en ce que** des bretelles (6) comportent un amincissement (8) réduisant l'épaisseur du film support de 20 % à 80 %.

10. Procédé selon l'une des revendications précédentes, **caractérisé en ce que** les bretelles (6) sont attachées au boîtier par une section de film support comprise entre 0,02 mm² à 0,2 mm².

11. Procédé selon l'une des revendications précédentes, **caractérisé en ce que** chaque bretelle est rompue par mouvement de rotation ou torsion de la matière de la bretelle au niveau de sa zone / ligne prédéterminée de rupture obtenue manuellement par basculement et/ou rotation du dispositif autour d'un axe passant par la bretelle et/ou un plan du film-support maître.

12. Procédé selon l'une des revendications précédentes, **caractérisé en ce que** le film-support maître (1) comprend une matrice polymère thermodurcissable en époxy avec fibres de verre.

13. Bobine de film-support maître (1) comportant des dispositifs électroniques (2A, 4A) obtenus par le procédé selon l'une des revendications précédentes.

14. Bobine selon la revendication précédente, **caractérisée en ce qu'**elle comporte ou est associée à un cadre 26 d'assistance à la séparation manuelle des dispositifs.
